# EUROPEAN PATENT SPECIFICATION

(11) **EP 3 310 082 B1**
(45) Date of publication and mention of the grant of the patent: **11.12.2019**
(21) Application number: 16002189.5
(22) Date of filing: 11.10.2016
(51) Int. Cl.: H04W 12/06, H04L 12/24, H04L 9/32, H04W 4/00, H04W 4/50, H04W 12/00, H04W 12/04, H04L 29/08

(54) **SECURE ACTIVATION**
SICHERE AKTIVIERUNG
ACTIVATION SÉCURISÉE

(43) Date of publication of application: 18.04.2018
(73) Proprietor: Giesecke+Devrient Mobile Security GmbH, 81677 München (DE)
(72) Inventor: Tea, Vui Huang, SE-12061 Stockholm (SE)

(56) References cited:
- US-A1- 2015 026 330
- US-A1- 2015 071 438
- US-A1- 2015 222 621
- In No "thorsten Kramp;Nicolas Sornin" ET AL: "2015 LoRa(TM) Alliance", SPECIAL OR 25 EXEMPLARY, INCIDENTIAL, PUNITIVE OR CONSEQUENTIAL DAMAGES OF ANY KIND, IN CONTRACT OR 26 IN TORT, IN CONNECTION WITH THIS DOCUMENT OR THE INFORMATION CONTAINED HEREIN, EVEN IF, 11 May 2016 (2016-05-11), XP055326484, Retrieved from the Internet: URL:https://www.lora-alliance.org/portals/ 0/specs/LoRaWAN%20Specification%201R0.pdf [retrieved on 2016-12-06]

## Description

The present invention is directed towards a method for secure communication between an end-device and a server system and is furthermore directed towards a communication protocol implementing the suggested method. Furthermore, the present invention is directed towards a communication system, which can be operated in accordance with the suggested method and the suggested communication protocol. In addition, a computer program product is suggested providing instructions, which implement the respective method steps and store the transmissions being triggered by the communication protocol. The invention is defined by the appended claims.

WO 2016/128 364 A1 teaches a safety lock, wherein a transponder is a LoRaWAN transponder and the inlay is a LoRaWAN inlay.

US 2015/026330 A1 discloses Systems and methods for generating unique identifiers for devices.

The LoRaWAN specification by LoRa Alliance, Version 1.0 dated January 2015, is publicly available over the internet and introduces basic concepts, which form the starting point for the present invention. The LoRaWAN network protocol is optimized for battery-powered end-devices that may be either mobile or mounted at fixed locations. Typically LoRaWAN networks are laid out in star-of-stars topology in which gateways relay messages between end-devices and a central network server at the backend. Gateways are connected to the network server via standard IP connections while end-devices use single-Hop-LoRa or other further communication means.

To participate in a LoRaWAN LPWA network, each end-device has to be activated. For Over-The-Air Activation (OTAA), end-devices must follow a join procedure prior to participating in data exchanges with the network-server. Typically each end-device is activated once on deployment, and it proceeds to continuously send data to the network server on a set schedule with the same session context information obtained from the join procedure. An end-device has to go through a new join procedure every time it is reset or has lost the session context information. Otherwise, it does not need to do a join procedure again.

It joins the network by sending a join-request message. In LoRa specification, AppEUI and DevEUI is static, hence the strength of the authentication request relies on the randomness of the 2 bytes (16-bit) DevNonce, or 65536 permutations. The join procedure is always initiated from the end-device by sending a join-request message. The join-request message contains the AppEUI and DevEUI of the end-device followed by a nonce of 2 octets (DevNonce).

DevNonce is a random value. DevNonce can be extracted by issuing a sequence of RSSI measurements under the assumption that the quality of randomness fulfills the criteria of true randomness. For each end-device, the network server keeps track of a certain number of DevNonce values used by the end-device in the past, and ignores join-requests with any of these DevNonce values from that end-device.

In general the DevNonce is a part of the overall data frame comprising 2 bytes. The DevEUI and the AppEUI each comprise 8 bytes and are further frames in the overall join-request message.

According to LoRa specification "the DevNonce can be extracted by issuing a sequence of RSSI measurements under the assumption that the quality of randomness fulfills the criteria of true randomness". In reality, the device manufacturers may use software-based pseudo random number generators as well. In any case, an attacker may be able to impose external factors on the end-device to cause it to generate a static or smaller range of DevNonce, e.g. freezing or magnetically shielding the end-device etc. The result could be a reduction in randomness from 65536 permutations to 1000 permutations, resulting in only 1.5% of the original quality.

Such an attack will ensure the quality of randomness fails the criteria of true randomness. This will ultimately compromise the end-device and any LPWA application service that relies on communication with the end-device.

Consequently, it is an object of the present invention to provide an improved method and communication protocol, which allows a secure communication and especially a secure activation in a wide area network without large technical effort. It is furthermore an object of the present invention to provide a communication system being arranged in accordance with the suggested method and communication protocol along with a computer program product comprising instructions implementing the suggested method and communication protocol.

The object is solved by the method according to independent claim 1. Further advantages and technical effects are provided by the dependent claims.

Accordingly, a method for secure communication between an end-device and a server system is suggested. In a first step transmitting at least one identifier and a randomized code from the end-device to the server system is performed. The server system randomly assigns a new value to the at least one identifier and uses the new value along with the randomized code for further data transmissions between the end-device and the server system and furthermore, the end-device is instructed to change the at least one identifier to the new value.

The secure communication being performed according to the suggested method may be the activation of the end-device as commonly known in the art. It is an aspect of the present invention that the LoRaWAN specification can be re-used and is adapted according to the present invention. This means that the overall protocol can be re-used as it is suggested merely to adapt the values of the respective data frames. Consequently, a lower technical effort arises as existing end-devices and server system can be re-used. One option to implement the present invention is to adapt the applied communication protocols and communication infrastructure such that the additional steps of assigning a new value to the at least one identifier and instructing the end-device to change the at least one identifier to the new value are realized.

The technical considerations, which led to the present invention involve that the security code, namely DevNonce, can be attacked and the generation of the respective value can be compromised. This can be performed by a freezing or magnetically shielding the end-device. An attacker may for instance decrease the range of random numbers to be generated, such that a range of possibilities being small enough to be evaluated by trial and error results. This is known as the so-called brute-force attack which can be performed using merely a small number of iterations until the respective code is identified by chance. The present invention does not require any hardware amendments and is therefore of special advantage. As the suggested subject matter is in conformance with the LoRaWAN specification as introduced as background art the deployment is straight forward and again can be accomplished at a minimum of effort.

The end-device may be a device being applied in the context of the so-called internet of things. This means that the end-device is typically equipped with only a minimum of hardware resources and uses for instance a battery or an induction coil for providing energy. Consequently, the end-device may comprise additional sensors or the like. The server system may be formed by a commonly known server or several servers or computing devices in general. The method steps are performed by respective computer implemented means such as instruction sets, which may be distributed over the network or be physically located on a single server system.

The underlying communication infrastructure can be a wide area network, especially a low-power wide-area network. Hence, additional hardware means are required for establishing data transmissions. These may involve the usage of further commonly known protocols.

For performing an activation of the end-device with the hardware environment transmitting at least one identifier is required. Typically along with the identifier a security code, for instance the randomized code, is transmitted. The randomized code serves as a security information being used for identifying single sessions. This randomized value is used for each session, which prevents replay attacks by sending previously recorded join-request messages with the intention of disconnection of the respective end-device from the network. As the randomized code is regenerated in each session, it is fostered that once an end-device is granted access a second end-device cannot provide the same recorded information and thereby steal the identification of the end-device, which is already granted access. In case such an attack occurs, the server will recognized that the randomized code has already been used and expects a different randomized code. Hence, each session for each end-device can be numbered accordingly and made unique such that the replay attack is no more possible.

The identifier may identify the respective end device, for instance by means of a serial number or may identify the respective application, which is to be activated. This can, for instance, be performed by respective data frames comprising 8 bytes. The respective identifiers can be implemented such that for instance two disjoint identifiers are provided.

The inventors found out that the underlying identifiers can be randomly chosen and therefore they can even be used for transmitting security information. This procedure allows that the respective identifiers are used in accordance with previous versions of LoRaWan, as merely additional steps are to be performed without altering previous implementations. It is an aspect of the present invention that not only the randomized code itself is used for security concerns but in addition to the randomized code the identifier or the identifiers are likewise used as they provide information which can both be used as an identifier as such and security information. Consequently, the semantics of the value of the identifiers are two-fold. The same information identifies the end-device and furthermore provides a randomized value, which corresponds to the provided randomized code.

Summarizing the above, the present invention expands the randomized code and uses the identifier information in addition to the randomized code, for instance DevNonce, for security concerns. It is therefore an advantage of the present invention that for instance not only 2 bytes are used for security information but 10 bytes in case one identifier is used and 18 bytes in case two identifiers are used. This corresponds to the sum of the bytes being provided by the randomized code, for instance two bytes, a first identifier, for instance DevEUI with 8 bytes and furthermore a second identifier, for instance AppEUI with 8 bytes. The skilled person realizes that further data frames can as well be used for expanding the randomized code, namely DevNonce.

Typically, the identifiers, such as DevEUI and AppEUI, are static values, which are adapted according to an aspect of the present invention. Their data type is changed such that a dynamic assignment is made possible. Hence, the same algorithms can be used as commonly known but the data types of the identifiers are amended such that in further steps newly generated values can be assigned.

The server system randomly assigns a new value to the at least one identifier and uses the new value along with the randomized code for further data transmissions between the end-device and the server system. The new value again is a randomized value which is stored under DevEUI and/or AppEUI but semantically contributes to DevNonce. Hence, additional information is coded without requiring additional memory or additional data transmissions. Merely further data transmissions arise from the fact that the end-device has to be made aware of the newly generated identifiers. Consequently, a message may be sent to the end-device instructing the end-device to change its identifiers accordingly. The end-device can then implement the new values being generated by the server so that both communication partners, namely the end-device and the server system, both know which identifier values to use.

Once the end-device has changed the at least one identifier to the new value or to the new values, respectively, the data transmissions can proceed and both communication partners know about the at least one identifier value and the randomized code.

This results in a larger space for possible security information and does not rely on the 2 bytes of DevNonce alone but provides up to 16 additional bytes. In case an attacker is able to disturb the generation of security information such as DevNonce as the randomized code, the range for possible permutations is still big enough that even in case it is minimized a large number of possible outcomes is available. This increases the security and enhances the commonly known DevNonce without technical effort.

According to an aspect of the present invention, the randomized code and the new value provide a security information. This provides the advantage that for instance session control can be accomplished on the basis of the identifiers without the necessity to introduce further data frames. Consequently, the transmissions are not increased in number even though the randomized code is enhanced. This is the case as both the identifier or the identifiers and the randomized code carry security information. This can be accomplished as the identifiers can hold any value, which has not previously been used. As any value is possible for the identifiers it can likewise be accomplished to use the randomly generated value of the identifier for security concerns.

According to a further aspect of the present invention the new value is chosen to be unique in the life cycle of the end-device. This fosters the advantage that no replay attack can be accomplished as the server always expects a newly introduced randomized code. For implementing the uniqueness of the codes the server infrastructure may provide means, which log the respective values and disable already used values. Such a log file may for instance provide an end-device unique number along with the values being assigned to the identifiers. When generating the new value the server device can consult the history and generate a new value in case an already used value is generated.

According to a further aspect of the present invention at least two identifiers are transmitted, which are randomly selected to have the new value assigned. This provides the advantage that an attacker will not know which one of the identifiers is used for providing a security information. In case two identifiers, for instance DevEUI and AppEUI, are provided that first identifier or the second identifier or even both identifiers can be adapted in accordance with the present invention. This means a new value can be assigned to any subset of the provided identifiers. It may also be of advantage to assign a new value to a specific subset of identifiers without using their new values for security concerns. In this way the attacker may recognize that some identifiers are assigned new values but will not know which ones to use as security information.

According to a further aspect of the present invention in case the new value has been previously used a further code is generated. This provides the advantage that an easy-to-use implementation is provided and a value which has already been used can be dismissed. In this way no further communication steps are necessary but the server system may completely generate the new values on its side.

According to a further aspect of the present invention a handshake between the end-device and the server system, a registration of the end-device at the server system and/or an activation of the end-device is performed. This provides the advantage that the secure communication can be performed in the context of an activation procedure, for instance an over-the-air activation as being specified in the LoRaWan specification. Hence, the technical advantages of the present invention can be applied in existing activation procedures.

According to a further aspect of the present invention the at least one identifier provides information about an end-device identification and/or about an identification of an instruction set. This provides the advantage that the information about an end-device may correspond with the known DevEUI and the information about an identification of an instruction set may correspond with AppEUI. Furthermore, the identifiers are arranged to uniquely identify the respective end-device.

According to a further aspect of the present invention the end-device and the server system communicate via a low-power wide-area network. This provides the advantage that known specifications for such networks can be re-used and the so-called internet of things can be established. The suggested method is specifically tailored to such networks as the suggested method steps do not consume large amounts of energy but can be executed on devices providing only limited hardware resources.

According to a further aspect of the present invention the end-device is a mobile end-device. This provides that advantage as set forth above the internet of things can be established and devices which are only able to store a limited amount of energy can execute the suggested method as well. The technical teaching is furthermore able to perform over-the-air activation thereby using wireless communication techniques.

According to a further aspect of the present invention the method is performed in accordance with the LoRaWAN specification by LoRa Alliance, Version 1.0 dated January 2015. This provides the advantage that compliance with existing specifications and protocols is established. In general, the settings as being described in the LoRaWAN specification can be re-used in accordance with the present invention. The suggested technical teaching can be performed in the context of LoRaWAN and rely on the specified infrastructure. The LoRaWAN specification is freely available from the website of Lo-Ra Alliance.

According to a further aspect of the present invention the randomized code is in accordance with the DevNonce. This provides the advantage that the suggested technical teaching of the randomized code can be applied using DevNonce and vice versa.

According to a further aspect of the present invention the at least one identifier is in accordance with DevEUI and/ or AppEUI. This provides the advantage that one identifier for DevEUI and one identifier for AppEUI can be provided. Furthermore, the at least one identifier can be implemented using each of DevEUI and/or AppEUI. AppEUI is a global application ID in IEEE EUI64 address space that uniquely identifies the application provider, for instance owner, of the end-device. The AppEUI is stored in the end-device before the activation procedure is executed. DevEUI is a global end-device ID in IEEE EUI64 address space that uniquely identifies the end-device. The present invention can be used to perform a join procedure. From an end-device's point of view the join procedure consists of two MAC messages exchanged with the server, namely a join-request and a join accept. The join procedure may be initiated from the end-device by sending a join-request message. The join-request message contains the AppEUI and DevEUI of the end-device followed by a nonce of 2 octets, namely DevNonce.

The object is also solved by a communication protocol for secure communication between an end-device and a server system comprising steps or triggering communication in accordance with the above described method steps.

The object is also solved by a system for secure communication between an end-device and a server system, comprising an interface being arranged to transmit at least one identifier and a randomized code from the end-device to the server system, wherein the server system to randomly assign a new value to the at least one identifier and uses the new value along with the randomized code for further data transmissions between the end-device and furthermore, the server system and the end device is instructed to change the at least one identifier to the new value.

The object is also solved by a computer program product comprising instructions for performing the suggested method and establishing the suggested communication protocol.

It is also of advantage that the suggested method steps can be implemented by means of physical elements and therefore be implemented by the respective communication system. Consequently, the described procedural aspects can as well be formed by means of structural aspects using the suggested hardware. Furthermore, the described communication system can be operated by usage of the suggested method and communication protocol. The other way round the communication system is arranged to perform the suggested method steps.

Further advantages and technical effects are described with reference to the accompanying figures, which show:
- Fig. 1:: a block diagram depicting an extract of the communication system for secure communication between an end-device and a server system according to an aspect of the present invention;
- Fig. 2: examples of identifiers and a randomized code according to an aspect of the present invention; and
- Fig. 3:: a flow chart depicting a method for secure communication according to an aspect of the present invention.

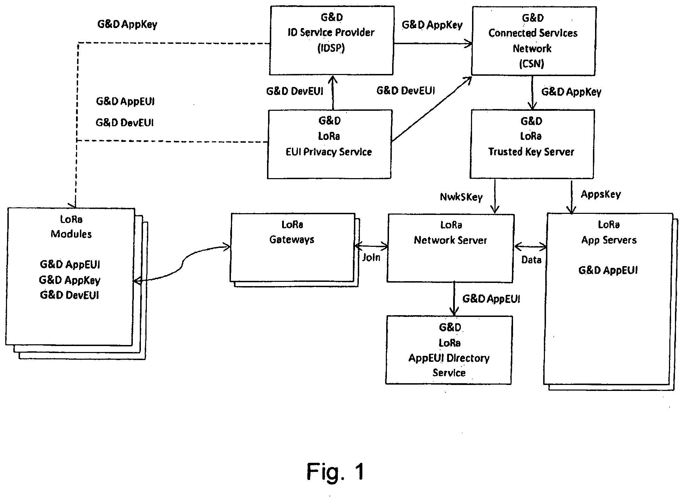

Fig. 1 shows a diagram illustrating an example of an implementation of the suggested communication system. The rectangular blocks demonstrate means, which perform method steps. The arrows indicate communication flow between the modules.

The solution according to an aspect of the present invention is to not rely entirely on the DevNonce for the random factor in the join-request message. Assuming the 2 bytes (16-bit) DevNonce can be compromised, the invention is to make the 8 bytes AppEUI and 8 bytes DevEUI dynamic instead of static to compensate for the reduction in randomness.

The EUI Privacy Service allows manufacturers as well as application providers to use an anonymous EUI in place of the manufacturer's and application provider's real and static EUI. The invention is to use a range of EUI to function as an extended random factor, i.e. a virtual, extended DevNonce. Taking the example of AppEUI, instead of a fixed AppEUI such as 0102030405060708 (hex), we use a dynamic AppEUI where the last 2 bytes are random: 112233445566xxxx (hex). For larger random permutations, more bytes can be used, or both AppEUI and DevEUI can be made dynamic.

The invention sends a command to the end-device to change the AppEUI/DevEUI after every successful join procedure. This ensures a new extended and compensated random value is in place the next time the end-device has to send a join-request message according to an aspect of the present invention. The invention keeps track of a certain number of dynamic AppEUI/ DevEUI values used by the end-device in the past, and prevents those from being issued to that end-device.

As it would be prohibitively expensive for manufacturers as well as application providers to use 65,536 EUI for each device and/or application server, they can rent it from the EUI Privacy Service on a timeshare basis, such that the same pool of EUI is rotated among multiple end-devices and/or application servers.

The following shows the flow when an end-device performs a LPWA OTAA join procedure according to an aspect of the present invention.
1. An end-device is deployed or reset; consequently it sends an OTAA join-request message uplink to the network-server. The join-request message contains the AppEUI and DevEUI of the end-device followed by a random DevNonce.
2. The network-server creates a join-accept message to send back to the end-device.
3. The invention (Device Nonce Enforcer) sends a request to the EUI Privacy Service to request for a random AppEUI and/or DevEUI.
4. The EUI Privacy Service searches the pool of AppEUI and/ or DevEUI that is rotated among multiple end-devices / application servers and randomly selects an unused AppEUI and/or DevEUI. The random selection can be assisted with a hardware-based true random number generator.
5. The EUI Privacy Service returns a random AppEUI and/or DevEUI.
6. The invention keeps track of a certain number of dynamic AppEUI/DevEUI values used by the end-device in the past, and prevents those from being issued to that end-device. If the new EUI was used previously, it sends a request to the EUI Privacy Service to request for a new random AppEUI and/or DevEUI.
7. The invention sends a downlink command to the end-device (via the network-server) to instruct it to change its AppEUI/DevEUI. This ensures a new extended/compensated random value is in place the next time the end-device has to send a Join-request message.
8. When the end-device has successfully changed its AppEUI/DevEUI, it sends a confirmation uplink message to the invention via the network server.
9. On receipt on the AppEUI/DevEUI change confirmation, the invention sends a notice to the EUI Privacy Service to release the previous AppEUI/DevEUI back to the pool.

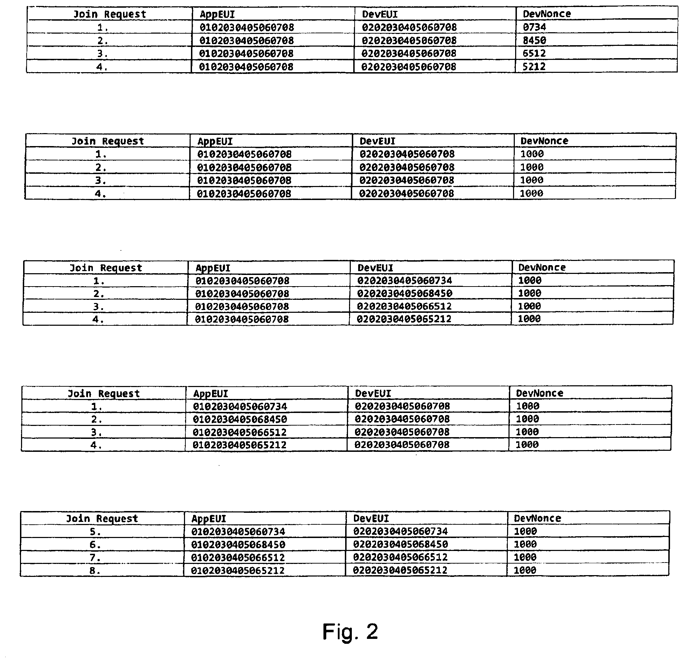

Fig. 2 shows five tables of values for join-requests. The identifiers according to Fig. 2 are named AppEUI and DevEUI and the randomized value is called DevNonce. In the first table a theoretical LPWA join-request operation is demonstrated, wherein no attack occurred. DevNonce random probability is 1 in 65536. As can be seen on the right hand side in the first table, the DevNonce, namely the randomized code, is chosen to be equally distributed within the range of possible randomized codes. Consequently, no attack has occurred.

The second table shows a compromised LPWA join-request operation, wherein an attack has occurred. DevNonce random probability is 1 in 1. The security is therefore breached as the attacker will certainly identify DevNonce. This is the case as on the right-hand side of the second table in the last row DevNonce is 1000 among all lines. Consequently, only one single DevNonce occurs, which can be easily estimated.

The third table shows a secured LPWA join-request operation, where an attack occurred but the DevEUI is protected in accordance with the present invention. The DevNonce random probability is 1 in 65536. As can be seen the DevNonce has been attacked as it is not altered in its value but the DevEUI is distributed. Consequently, as DevEUI is used as security information as well different numbers occur increasing the random probability such that a wider range of security codes is possible.

The fourth table shows a secured LPWA join-request operation, with an attack and the subject matter of the present invention being applied on AppEUI. The DevNonce random probability is 1 in 65536. This is the case as the AppEUI, as can be seen in the second column, has been changed.

The fifth table shows the best performance as both DevEUI and AppEUI are adapted in accordance with the present invention. This can be named a highly secured LPWA join-request. The DevNonce random probability is 1 in 4294967296. Consequently, the procedure is secured although the DevNonce has been attacked.

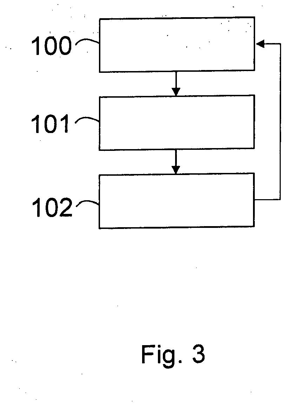

Fig. 3 shows a method for secure communication between an end-device and a server system, comprising the steps of transmitting 100 at least one identifier and a randomized code from the end-device to the server system, wherein the server system randomly assigns 101 a new value to the at least one identifier and uses the new value along with the randomized code for further data transmissions between the end-device and the server system and the end-devices is instructed 102 to change the at least one identifier to the new value.

## Claims

1. A method for secure communication between an end-device and a server system, comprising the steps:
- transmitting (100) at least one identifier and a randomized code from the end-device to the server system, **characterized in that**
- the server system randomly assigns (101) a new value to the at least one identifier and uses the new value along with the randomized code for further data transmissions between the end-device and the server system; and
- the end-device is instructed (102) to change the at least one identifier to the new value, wherein
the end-device and the server system communicate via a Low-Power Wide-Area Network.

2. Method according to claim 1, **characterized in that** the randomized code and the new value provide a security information.

3. The method according to claim 1 or 2, **characterized in that** the new value is chosen to be unique in the lifecycle of the end-device.

4. The method according to any one of the preceding claims, **characterized in that** at least two identifiers are transmitted, which are randomly selected to have the new value assigned.

5. The method according to any one of the preceding claims, **characterized in that** in case the new value has been previously used a further value is generated.

6. The method according to any one of the preceding claims, **characterized in that in that** a handshake between the end-device and the server system, a registration of the end-device at the server system and/ or an activation of the end-device is performed.

7. The method according to any one of the preceding claims, **characterized in that** the at least one identifier provides information about an end-device identification and/ or about an identification of an instruction set.

8. The method according to any one of the preceding claims, **characterized in that** the end-device is a mobile end-device.

9. The method according to any one of the preceding claims, **characterized in that** the method is performed in accordance with the LoRaWAN Specification by LoRa Alliance, Version 1.0 dated January 2015.

10. The method according to claim 9, **characterized in that** the randomized code is in accordance with DevNonce.

11. The method according to claims 9 or 10, **characterized in that** the at least one identifier is in accordance with DevEUI and/ or AppEUI.

12. A communication protocol for secure communication between an end-device and a server system, comprising:
- transmitting (100) at least one identifier and a randomized code from the end-device to the server system, **characterized in that**
- the server system randomly assigns (101) a new value to the at least one identifier and uses the new value along with the randomized code for further data transmissions between the end-device and the server system; and
- the end-device is instructed (102) to change the at least one identifier to the new value, wherein
the end-device and the server system communicate via a Low-Power Wide-Area Network.

13. A system for secure communication between an end-device and a server system, comprising:
- an interface being arranged to transmit (100) at least one identifier and a randomized code from the end-device to the server system, **characterized in that**
- the server system is arranged to randomly assign (101) a new value to the at least one identifier and uses the new value along with the randomized code for further data transmissions between the end-device and the server system; and
- the end-device is instructed (102) to change the at least one identifier to the new value, wherein
the end-device and the server system are arranged to communicate via a Low-Power Wide-Area Network.

14. A computer program product being arranged to perform a method in accordance with any one of the preceding claims 1 to 11.

## Patentansprüche

1. Verfahren zur sicheren Kommunikation zwischen einem Endgerät und einem Serversystem, umfassend die Schritte:
- Übertragen (100) mindestens eines Identifikators und eines zufälligen Codes von dem Endgerät an das Serversystem, **dadurch gekennzeichnet, dass**
- das Serversystem dem mindestens einen Identifikator zufällig einen neuen Wert zuweist (101) und den neuen Wert zusammen mit dem zufälligen Code für weitere Datenübertragungen zwischen dem Endgerät und dem Serversystem verwendet; und
- das Endgerät angewiesen wird (102), den mindestens einen Identifikator auf den neuen Wert zu ändern, wobei
das Endgerät und das Serversystem über ein Niedrigenergie-Wide-Area-Network kommunizieren.

2. Verfahren nach Anspruch 1, **dadurch gekennzeichnet, dass** der zufällige Code und der neue Wert eine Sicherheitsinformation bereitstellen.

3. Verfahren nach Anspruch 1 oder 2, **dadurch gekennzeichnet, dass** der neue Wert so gewählt wird, dass er während des Lebenszyklus des Endgeräts einzigartig ist.

4. Verfahren nach einem der vorhergehenden Ansprüche, **dadurch gekennzeichnet, dass** mindestens zwei Identifikatoren übertragen werden, die zufällig ausgewählt werden, um den neuen Wert zuzuweisen.

5. Verfahren nach einem der vorhergehenden Ansprüche, **dadurch gekennzeichnet, dass** im Falle einer vorherigen Verwendung des neuen Wertes ein weiterer Wert erzeugt wird.

6. Verfahren nach einem der vorstehenden Ansprüche, **dadurch gekennzeichnet, dass** ein Handshake zwischen dem Endgerät und dem Serversystem, eine Registrierung des Endgeräts gegenüber dem Serversystem und/oder eine Aktivierung des Endgeräts durchgeführt wird.

7. Verfahren nach einem der vorhergehenden Ansprüche, **dadurch gekennzeichnet, dass** der mindestens eine Identifikator Informationen über eine Endgeräteidentifikation und/oder über eine Identifikation eines Befehlssatzes bereitstellt.

8. Verfahren nach einem der vorhergehenden Ansprüche, **dadurch gekennzeichnet, dass** das Endgerät ein mobiles Endgerät ist.

9. Verfahren nach einem der vorstehenden Ansprüche, **dadurch gekennzeichnet, dass** das Verfahren in Übereinstimmung mit der LoRaWAN-Specification der LoRa Alliance, Version 1.0 vom Januar 2015, durchgeführt wird.

10. Verfahren nach Anspruch 9, **dadurch gekennzeichnet, dass** der zufällig Code in Übereinstimmung mit DevNonce steht.

11. Verfahren nach den Ansprüchen 9 oder 10, **dadurch gekennzeichnet, dass** der mindestens eine Identifikator in Übereinstimmung mit DevEUI und/oder AppEUI steht.

12. Kommunikationsprotokoll zur sicheren Kommunikation zwischen einem Endgerät und einem Serversystem, umfassend:
- Übertragen (100) mindestens eines Identifikators und eines zufälligen Codes von dem Endgerät an das Serversystem, **dadurch gekennzeichnet, dass**
- das Serversystem dem mindestens einen Identifikator zufällig einen neuen Wert zuweist (101) und den neuen Wert zusammen mit dem zufälligen Code für weitere Datenübertragungen zwischen dem Endgerät und dem Serversystem verwendet; und
- das Endgerät angewiesen wird (102), den mindestens einen Identifikator auf den neuen Wert zu ändern, wobei
das Endgerät und das Serversystem über ein Niedrigenergie-Wide-Area-Network kommunizieren.

13. System zur sicheren Kommunikation zwischen einem Endgerät und einem Serversystem, umfassend:
- eine Schnittstelle, die eingerichtet ist, um mindestens einen Identifikator und einen zufälligen Code von dem Endgerät an das Serversystem zu übertragen (100), **dadurch gekennzeichnet, dass**
- das Serversystem eingerichtet ist, dem mindestens einen Identifikator zufällig einen neuen Wert zuzuweisen (101) und den neuen Wert zusammen mit dem zufälligen Code für weitere Datenübertragungen zwischen dem Endgerät und dem Serversystem zu verwenden; und
- das Endgerät angewiesen wird (102), den mindestens einen Identifikator auf den neuen Wert zu ändern, wobei
das Endgerät und das Serversystem über ein Niedrigenergie-Wide-Area-Network kommunizieren.

14. Computerprogrammprodukt, eingerichtet, um ein Verfahren nach einem der vorhergehenden Ansprüche 1 bis 11 durchzuführen.

## Revendications

1. Procédé destiné à une communication sécurisée entre un dispositif terminal et un système de serveur, comprenant les étapes consistant à :
- transmettre (100) au moins un identifiant et un code randomisé du dispositif terminal au système de serveur, **caractérisé en ce que**
- le système de serveur attribue de manière aléatoire (101) une nouvelle valeur au au moins un identifiant et utilise la nouvelle valeur conjointement avec le code randomisé pour des transmissions de données supplémentaires entre le dispositif terminal et le système de serveur, et
- il est ordonné (102) au dispositif terminal de modifier le au moins un identifiant sur la nouvelle valeur, dans lequel
le dispositif terminal et le système de serveur communiquent via un réseau étendu (Wide Area Network, WAN) de faible puissance.

2. Procédé selon la revendication 1, **caractérisé en ce que** le code randomisé et la nouvelle valeur fournissent des informations de sécurité.

3. Procédé selon la revendication 1 ou 2, **caractérisé en ce que** la nouvelle valeur est choisie pour être unique dans le cycle de vie du dispositif terminal.

4. Procédé selon l'une quelconque des revendications précédentes, **caractérisé en ce qu'**au moins deux identifiants sont transmis, lesquels sont sélectionnés de manière aléatoire pour présenter la nouvelle valeur attribuée.

5. Procédé selon l'une quelconque des revendications précédentes, **caractérisé en ce que** dans le cas où la nouvelle valeur a été utilisée précédemment, une valeur supplémentaire est générée.

6. Procédé selon l'une quelconque des revendications précédentes, **caractérisé par** l'exécution d'une poignée de main entre le dispositif terminal et le système de serveur, d'un enregistrement du dispositif terminal sur le système de serveur, et/ou d'une activation du dispositif terminal.

7. Procédé selon l'une quelconque des revendications précédentes, **caractérisé en ce que** le au moins un identifiant fournit des informations concernant une identification de dispositif terminal et/ou concernant une identification d'un jeu d'instructions.

8. Procédé selon l'une quelconque des revendications précédentes, **caractérisé en ce que** le dispositif terminal est un dispositif terminal mobile.

9. Procédé selon l'une quelconque des revendications précédentes, **caractérisé en ce que** le procédé est exécuté conformément à la Spécification LoRaWAN par LoRa Alliance, version 1.0 de janvier 2015.

10. Procédé selon la revendication 9, **caractérisé en ce que** le code randomisé est conforme à DevNonce.

11. Procédé selon la revendication 9 ou 10, **caractérisé en ce que** le au moins un identifiant est conforme à DevEUI / ou AppEUI.

12. Protocole de communication pour communication sécurisée entre un dispositif terminal et un système de serveur, comprenant les étapes consistant à :
- transmettre (100) au moins un identifiant et un code randomisé du dispositif terminal au système de serveur, **caractérisé en ce que**
- le système de serveur attribue de manière aléatoire (101) une nouvelle valeur au au moins un identifiant, et utilise la nouvelle valeur conjointement avec le code randomisé pour des transmissions de données supplémentaires entre le dispositif terminal et le système de serveur, et
- il est ordonné (102) au dispositif terminal de modifier le au moins un identifiant sur la nouvelle valeur, et dans lequel
le dispositif terminal et le système de serveur communiquent via un réseau étendu (Wide Area Network, WAN) de faible puissance.

13. Système pour une communication sécurisée entre un dispositif terminal et un système de serveur, comprenant :
- une interface agencée pour transmettre (100) au moins un identifiant et un code randomisé du dispositif terminal au système de serveur, **caractérisé en ce que**
- le système de serveur est agencé pour attribuer de manière aléatoire (101) une nouvelle valeur au au moins un identifiant, et utilise la nouvelle valeur conjointement avec le code randomisé pour des transmissions de données supplémentaires entre le dispositif terminal et le système de serveur, et
- il est ordonné (102) au dispositif terminal de modifier le au moins un identifiant sur la nouvelle valeur, dans lequel
le dispositif terminal et le système de serveur sont agencés pour communiquer via un réseau étendu (Wide Area Network, WAN) de faible puissance.

14. Produit de programme informatique agencé pour exécuter un procédé selon l'une quelconque des revendications 1 à 11.
